# EUROPEAN PATENT SPECIFICATION

(11) **EP 0 364 277 B1**
(45) Date of publication and mention of the grant of the patent: **21.12.1994**
(21) Application number: 89310485.1
(22) Date of filing: 12.10.1989
(51) Int. Cl.: F16H 7/12

(54) **Compact automatic belt tensioner**
Kleinbauender, automatischer Riemenspanner
Tendeur de courroie automatique et compact

(30) Priority: 13.10.1988 JP 258870/88; 15.12.1988 JP 318201/88
(43) Date of publication of application: 18.04.1990
(60) Divisional application: 92119811.5
(73) Proprietor: MITSUBOSHI BELTING LTD., Kobe-shi Hyogo (JP)
(72) Inventor: Hirai, Hideo, Kakogawa-shi Hyogo (JP); Ando, Masakatsu, Kobe Hyogo (JP); Hashimoto, Yasuhiro, Miki-shi Hyogo (JP); Fujimoto, Naoki, Kobe Hyogo (JP); Tanaka, Norikazu, Osaka-shi (JP); Yamakawa, Susumu, Kobe Hyogo (JP)
(74) Representative: Bond, Bentley George

(56) References cited:
- EP-A- 0 188 077
- DE-A- 3 716 570
- FR-A- 2 624 577
- US-A- 4 698 049
- WO-A 86/01571

## Description

This invention relates to automatic drive belt tensioning apparatus and, more particularly, to an apparatus of the type having a pivotable tensioner arm with an idler pulley thereon which is borne against an unsupported portion of a drive belt to create a predetermined tension thereon as defined by the features outlined in the preamble of claim 1 and known from US-A-46 98 049.

It is conventional to use a belt tensioning apparatus on drive belt systems such as those in the automobile industry. The automobile systems are generally characterized as serpentine belt systems. In such systems, an endless belt is trained in a circuitous path about a plurality of accessories, such as pumps, alternators, etc. The belt frictionally drives pulleys associated with shafts on the accessories. For the accessories to operate consistently and effectively, it is necessary for the frictional drive force developed on the accessory pulleys to be relatively constant. This is conventionally accomplished by producing a predetermined tension on the belt through a belt tensioning apparatus.

Typically, such tensioners employ hydraulic or pneumatic mechanisms, rubber and a steel spring or resin, etc. to impart a desired tension on the belt through compression, tension, bending, or twisting.

One objective of automobile designers is to maximize the passenger compartment space and minimize the compartment space for the engine. With the premium on space in the engine compartment, it is important that all engine components, including the belt tensioner, be made as small as possible without comprising the operation thereof.

As a rule, prior art tensioners have had a very substantial dimension both axially and radially with respect to the pivot axis for the tensioner arm. For example, US-A 4,473,362 shows a belt tensioning apparatus with a coil spring 44 that exerts a torsional bias on a tensioner arm 78 to thereby bear an idler pulley 42 on the end of the arm 78 against a drive belt. Due to the large torsional force that the coil spring 44 must develop, the wire from which the spring 44 is formed is heavy gauge. The required torque that must be produced also necessitates a large number of coil turns with relatively large radii. The spring 44 must also have considerable strength axially thereof to perform a biasing function as part of a damping mechanism. The result is that the overall dimensions of the belt tensioning apparatus become quite large to accommodate the spring 44.

One prior art US-A 4,285,676 resorts to the use of multiple springs to produce the desired forces. The resulting dimensions of the tensioning apparatus, particularly radially of the tensioner arm pivot axis, become quite large.

The space problems are further aggravated by the provision in certain prior art structures, such as that in US-A 4 473 362 of damping mechanisms to control pivoting of the tensioner arm. This damping feature is generally incorporated to prevent tensioner arm backlash and vibrations that may cause a resonant condition in the drive belt and/or tensioning apparatus, as may occur with abrupt acceleration in automobiles.

One such damping mechanism is shown in US-A 4,362,525 and has a damping mechanism 58 that is spaced a considerable distance away from the structure for biasing the tensioner arm 25 and associated idler pulley 35. This necessitates the provision of a large mounting bracket 10 which competes with other engine accessories for space.

Another known damping mechanism is that in US-A 4,661,087 which employs a piston or blade to be operated in a liquid to create a damping force. A considerable amount of space is required for this mechanism as well.

In EP-A-0188077, there is disclosed an apparatus for tensioning a drive belt, said tensioning apparatus comprising: a tensioner arm having an idler pulley thereon for engagement with a surface of a drive belt, means for mounting the tensioner arm to a support for pivoting movement in first and second opposite directions relative to the support, and torsion coil spring means formed of a wire and acting between the mounting means and the tensioner arm for biasing the tensioner arm in one of said two directions.

The present invention is specifically directed to overcoming the above enumerated problems in a novel and simple manner.

According to the present invention, there is provided a serpentine belt system comprising:
an endless belt trained in a circuitous path about a plurality of rotatable pulleys such as on an automobile engine in an engine compartment, the pulleys operatively connected to various accessories operable by rotation of the pulleys, the pulleys being driven by a frictional force exerted by the driven endless belt on the pulleys;
a tensioner arm having an idler pulley thereon for engagement with a surface of the endless belt;
means for mounting the tensioner arm to a support for pivoting movement in first and second opposite directions relative to the support about an axis; and
torsion coil spring means formed of a wire and acting between the mounting means and tensioner arm for biasing the tensioner arm in one of the first and second directions;
characterised in that said wire has a rectangular or square cross section, and in that said tensioner arm has an integrally formed first cylindrical wall radially outside of the torsion coil spring means which wall is arranged as an envelope closely around said coil spring means.

It is the principal objective of the present invention to minimize the space requirements for a belt tensioning apparatus without compromising the performance thereof. This is accomplished by minimizing the space requirements for the torsion coil spring. The cross section of the wire defining the torsion coil spring is square or rectangular. The square and/or rectangular wire is stronger than circular wire and can thus be used to develop the same torque and axial forces as a spring with a larger number of turns and larger radius made from wire having a circular cross section. Further, the torsion angle required to produce a given torque with a spring made from rectangular or square wire is less than that for circular wire for a given spring constant.

The present invention is also concerned with minimizing the size of a damping mechanism for the tensioner arm.

The tensioner arm has a mounting body with a first wall having a first surface facing in a first axial direction. The mounting structure for the tensioner arm has a second wall with a second surface facing the first surface. The mounting body has a third surface facing axially oppositely to the first direction to coact with a friction producing surface on the mounting structure. The torsion coil spring is compressed between the first and second surfaces and urges the third surface against the friction producing surface on the mounting structure to damp pivoting movement of the tensioner arm.

In an alternative form, a friction plate is mounted for axial movement relative to the mounting structure and fixed against rotation relative thereto. Structure independent of the torsion coil spring biases the friction plate axially towards a part of the tensioner arm to damp pivoting of the tensioner arm. A friction element, preferably of nylon resin, is interposed between the friction plate and the part of the tensioner arm.

To further compact the overall system, the friction plate has a stepped cylindrical configuration with a first portion having a first diameter and a second portion with a second diameter that is larger than the first diameter. A coil spring surrounds the first friction plate portion and bears against an axially facing surface on the second portion of the friction plate.

The invention also contemplates a simple and compact structure for positively holding the ends of coil springs used to create torsion between the tensioner arm and mounting structure therefor. To accomplish this, there is a pin and socket arrangement between one spring end and the mounting structure and a like arrangement between the other spring end and tensioner arm. Alternatively, bores can be provided in the tensioner arm and mounting structure to receive the spaced coil spring ends. A still further alternative is the provision of posts on the tensioner arm and mounting structure against which the spring ends can releasably bear as the spring is loaded during assembly.

Reference will now be made, by way of example, to the drawings in which:
Fig. 1 is a schematic representation of a serpentine belt system in an automobile, with a belt tensioning apparatus according to the present invention incorporated therein;
Fig. 2 is a side elevation view in section of a belt tensioning apparatus according to the present invention;

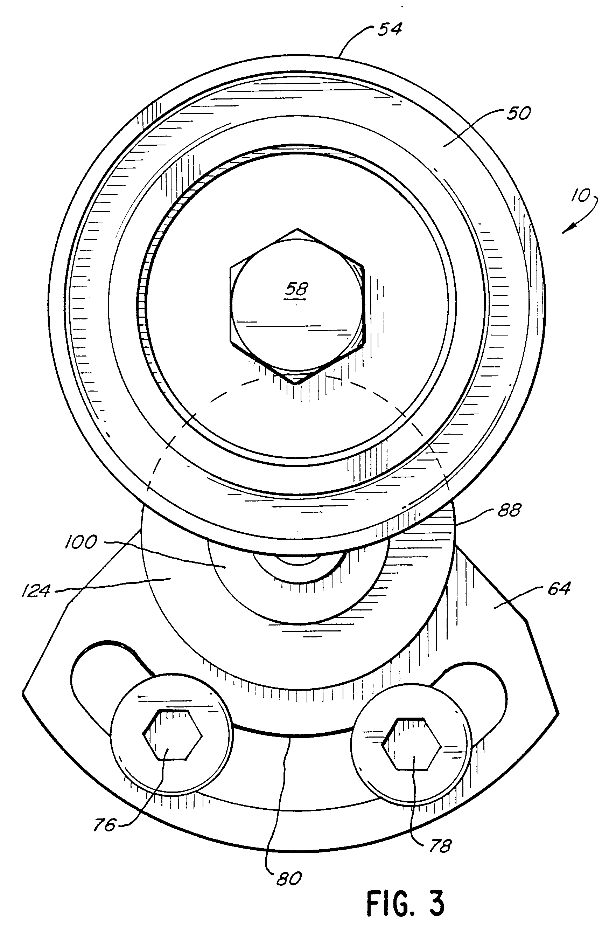

Fig. 3 is an end view of the belt tensioning apparatus of Fig. 2;
Fig. 4 is an enlarged, fragmentary view of a coil spring, partially in section, used to create a torsional biasing force on a tensioner arm on the belt tensioning apparatus of Fig. 2;
Fig. 5 is an enlarged fragmentary view showing an arrangement for abutting one end of the torsion coil spring of Fig. 4 to allow loading thereof;
Fig. 6 is a view as in Fig. 5 with a pin and slot arrangement for the coil spring ends, which is an alternative to the Fig. 5 arrangement; and
Fig. 7 is a side elevation view in section of a modified form of belt tensioning apparatus according to the present invention.

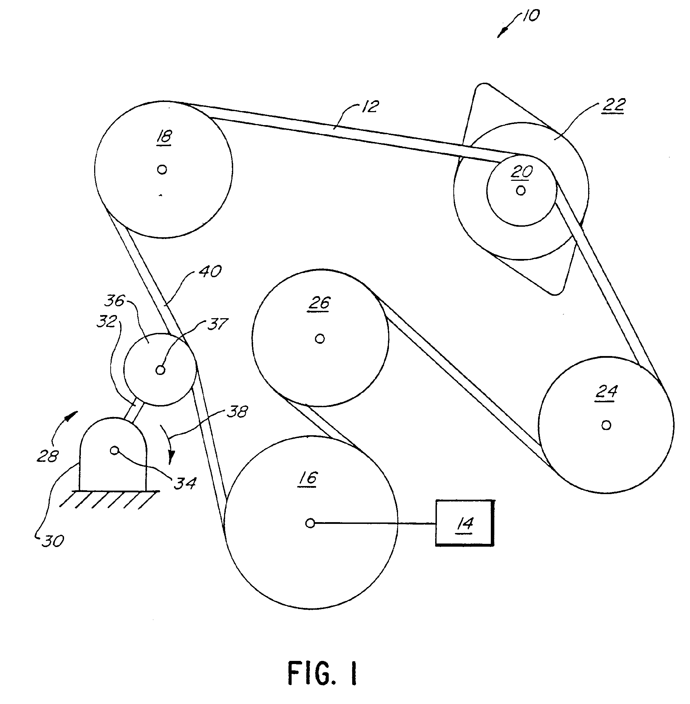

An exemplary system with which an automatic belt tensioner, according to the present invention, can be incorporated, is shown in Fig. 1 at 10. The system 10 is what is generally characterized as a serpentine belt system wherein a single, endless belt 12 drives, in this particular system, four separate automobile accessories. An engine 14 operates, through a drive shaft (not shown), a driving pulley 16 which, through belt 12, drives a pulley 18 which is operatively connected to an air pump (not shown), a pulley 20 on the operating shaft of an alternator 22, a pulley 24 on a shaft which operates a power steering unit (not shown), and a pulley 26 operatively connected to the shaft of a water pump (not shown) for the engine 14.

The inventive belt tensioner, shown schematically in Fig. 1 at 28, has a fixed support 30, to which a tensioner arm 32 is attached for pivoting movement in first and second opposite directions, about a pivot axis 34. The tensioner arm 32 carries at its end an idler pulley 36, that is rotatable about an axis 37, which is parallel to the tensioner arm pivot axis 34. The tensioner arm 32 is resiliently biased in rotation in the direction of arrow 38 to bear the idler pulley 36 against an unsupported belt portion 40 between the driving pulley 16 and driven pulley 18, with a force calculated to cause a constant predetermined tension to be applied to the belt 12.

At startup of the engine 14 and the driving pulley 16, there is a tendency of the belt portion 40 to thrust the idler pulley 36 so as to pivot the tensioner arm 32 oppositely to the direction of arrow 38. Abrupt movement of the tensioner arm 32 oppositely to the direction of arrow 38 is undesirable and is prevented by the structure of the present invention, as described in detail below.

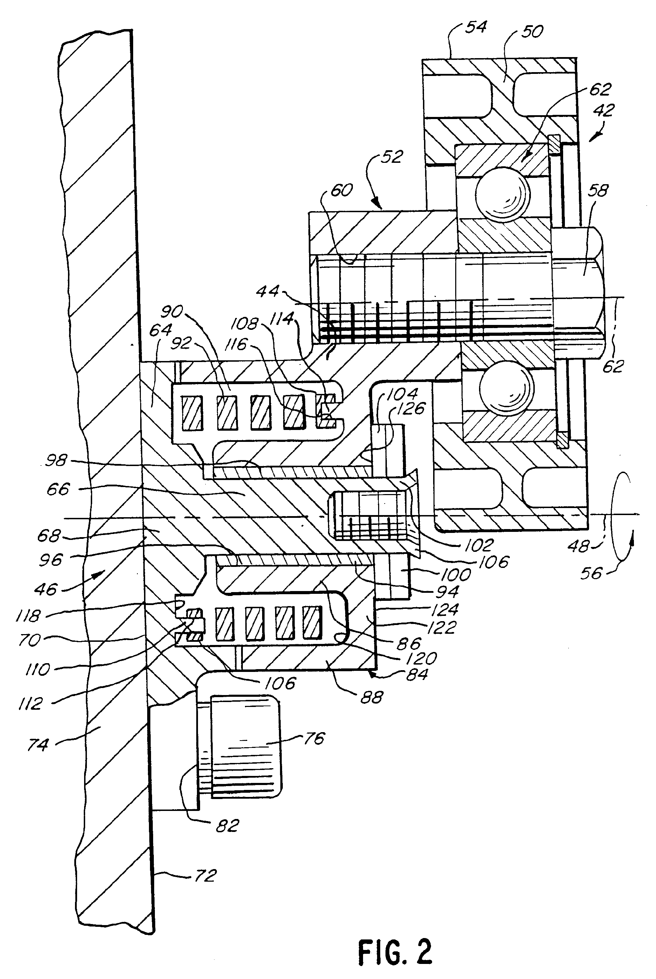

A preferred form of belt tensioning apparatus, according to the present invention, is shown at 42 in Fig. 2 and consists of a tensioner arm 44, which is rotatable relative to mounting structure, shown generally at 46, for rotation in first and second opposite directions about pivot axis 48. The tensioner arm 44 has an idler pulley 50 on its one end 52. The idler pulley 50 has a peripheral surface 54 which, in operation, is rotatably biased against a drive belt in the direction of arrow 56.

The idler pulley 50 is journaled for rotation on the arm end 52 and is maintained in operative position by a bolt 58 which extends into a threaded bore 60 in the arm end 52. A ball bearing 62 on the arm end 52 assures smooth rotation of the idler pulley 50 about its rotational axis 62.

The mounting structure 46 for the tensioner arm 44 consists of a mounting plate 64 with a shaft 66 extending axially therefrom in cantilever fashion. The mounting plate 64 has a wall 68 with a flat surface 70 that is placed facially against the flat surface 72 of a fixed support 74.

The plate 64 is held against the support 74 by two bolts 76, 78, threaded into bores (not shown) in the support 74. The bolts 76, 78 extend through an arcuate slot 80 in the plate 64. The bolts 76, 78 each have enlarged heads with shoulders 82 that bear the plate 64 rigidly against the support surface 72. The arcuate slot 80 permits rotational adjustment of the position of the tensioning apparatus 42 relative to the belt (not shown).

The tensioner arm 44 has an integral mounting portion 84 which attaches to the mounting shaft 66. The mounting portion 84 has a generally cylindrical configuration with a radially inner wall 86 and a concentric outer wall 88, which walls cooperatively bound an annular space 90 for a torsion coil spring 92.

The mounting portion 84, in assembly, is directed axially over the mounting shaft 66. A cylindrical bushing 94 is interposed between the radially inwardly facing surface 96 of the inner wall 86 and the radially outwardly facing surface 98 of the shaft 66 and facilitates both rotational and axial movement of the tensioner arm 44 relative to the shaft 66.

The tensioner arm 44 is held on the shaft 66 by a locking washer 100. With the mounting portion 84 of the tensioner arm 44 operatively positioned on the shaft 66, the shaft end 102 projects sufficiently therefrom to accept both the washer 100 and a friction generating washer 104, made preferably of a nylon material. With the mounting portion 84 on the shaft 66 and the washers 100, 104 in place, the shaft end 102 can be deformed radially outwardly at 106 to a diameter greater than the diameter of the bores in the washers 100, 104, to prevent the escape thereof off of the end 102 of the shaft 66.

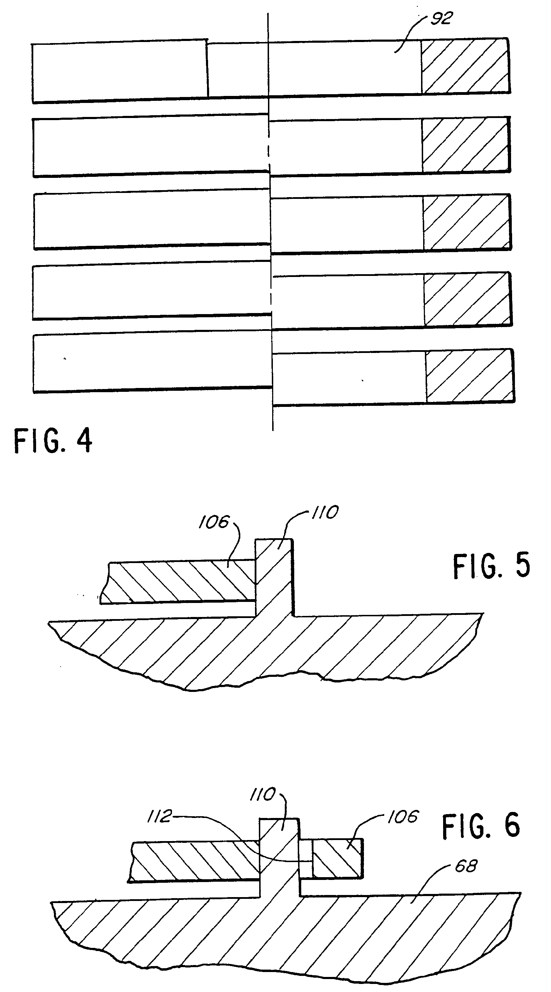

Biasing of the tensioner arm 44 in the direction of arrow 56 in Fig. 2 is accomplished by the coil spring 92. The coil spring 92 has spaced ends 106, 108 which are respectively attached to the mounting wall 68 and tensioner arm 44. Figs. 2 and 6 show preferred structure for attached the spring ends 106, 108. A pin 110 projects axially from the wall 68 and into a socket 112 in the pin end 106. A similar pin 114 on the tensioner arm 44 is received in a socket 116 in the other pin end 108. By securing the pin ends 106, 108, as described, the spring 92 can be preloaded, by rotation of the tensioner arm 44, to produce a desired torque on the tensioner arm 44 in the direction of arrow 56.

The invention contemplates that the wire from which the spring 92 is formed be square or rectangular in cross section. The spring 92 is inherently more rigid than a spring made from a corresponding wire of circular cross section, as is conventionally used. Less turns in a smaller radius are required for the spring 92 than a corresponding spring made of circular spring wire. This diminishes both the axial and radial dimensions of the spring 92 which results in a corresponding reduction in the overall size of the tensioning apparatus 42.

In addition to producing the required torque on the tensioner arm 44, the spring 92, in the Fig. 2 embodiment, also causes a damping force to be produced to control pivoting of the tensioner arm 44. The coil spring 92 is compressed between an axially facing surface 118 on the wall 68 and a facing wall surface 120 on a wall portion 122 connecting between the inner wall 86 and outer wall 88 on the mounting portion 84. The spring 92 thereby biases a third surface 124 on the mounting portion 84 axially against a friction generating surface 126 on the washer 104, which is rigidly backed by the washer 100. The damping force developed between the surface 124 on the mounting portion 84 and the surface 126 on the washer 104 is dictated by the compressive force from the spring 92. As the spring 92 is loaded, its effective axial and diameter are reduced. As the tensioner arm 44 pivots oppositely to the direction of arrow 56, the spring 92 is relaxed and thereby effectively lengthens in an axial direction so that the compressive force produced thereby tending to move the mounting portion 86 against the washer 104 is increased. Thus, damping increases progressively as the tensioner arm 44 moves away from a tensioning direction, i.e. oppositely to the direction of arrow 56.

Fig. 5 shows a slightly modified arrangement for fixing the spring ends 106, 108. Instead of having a socket 112 in the spring end 106, the spring end 106 merely abuts the pin 110 without any connection therebetween. The restoring force in the spring end 106 bears the spring end 106 against the post 110.

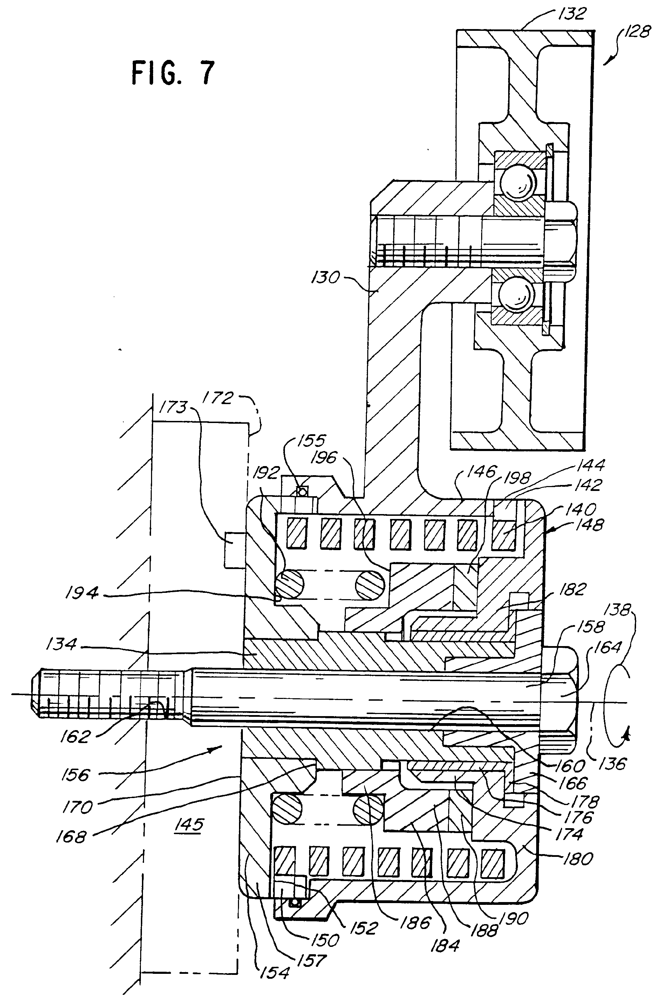

A modified form of belt tensioning apparatus, according to the present invention, is shown at 128 in Fig. 7. The belt tensioning apparatus 128 has a tensioner arm 130 with an idler pulley 132, that is pivotable about a shaft 134 centered on axis 136. Torque is exerted on the tensioner arm 130 in the direction of arrow 138 by a loaded coil spring 140, made from wire with a rectangular or square cross section. The coil spring 140 has a free end 142 directed through a bore 144 in a peripheral wall 146 on a mounting portion 148 of the tensioner arm 130. The opposite spring end 150 is directed through a bore 152 in a mounting plate 154, which is rigidly secured to a fixed support 145 for the tensioning apparatus at 128. The wall 146 and a flange 157 on the plate 154 fit one within the other. An annular seal 155 is interposed between a radially enlarged part of the wall 146 and the flange 157 to prevent dust, etc, from migrating between the wall 146 and flange 157.

The mounting structure for the tensioner arm 130 is indicated generally at 156 and includes the mounting plate 154 and the mounting shaft 134. A bolt 158 extends through a bore 160 in the shaft 134 and into a threaded bore 162 in the support 145. The bolt head 164 bears against a stepped bushing 166, which in turn urges the shaft 134 towards the support 145. An annular shoulder 168 on the shaft 134 captively maintains a flat surface 170 on the mounting plate 154 facially against a facing flat surface 172 on the support 145 so that the shaft 134 and mounting plate 154 define a unitary, rigid mounting structure.

The mounting portion 148 of the tensioner arm 130 has an annular inner wall part 174 surrounding the shaft 134. A bushing 176 with a radially projecting annular flange 178 thereon is interposed between the wall part 174 and the shaft 134 to smoothly guide rotation of the tensioner arm 130 around the shaft 134.

As in the prior embodiment, the spring 140 is compressed in an axial direction between the plate 154 and wall 180 of the tensioner arm mounting portion 148 to thereby resiliently bias a wall 182 on the mounting portion 148 against the flange 178 on the bushing 176 which abuts the other bushing 166 that is fixed rigidly to the shaft 134.

According to the invention, a stepped friction plate 184 surrounds the shaft 134. The friction plate 184 has a cylindrical first portion 186, which is suitably keyed to the shaft 134 so as to be movable axially relative thereto but fixed against rotation. The friction plate 184 has a second cylindrical portion 188, integral with the first portion 186, with an annular, axially facing friction generating surface 190.

According to the invention, a coil spring 192 surrounds the first friction plate portion 186 and is compressed between a surface 194 on the mounting plate 154 and an annular shoulder 196 defined by the second friction plate portion 188. The invention, however, contemplates use of other than a coil spring 192, as for example, a leaf spring, and also that the spring might act against an enlarged part (not shown) of the shaft 134 rather than the plate 154. The spring 192 urges the friction plate 184 axially to the right in Fig. 7 towards the mounting portion wall 182. A friction element 198 is interposed between the friction generating surface 190 and the wall 182 and is preferably secured to the wall 182. Preferably, the friction generating element 198 is a high friction material such as nylon resin, phenol resin, fluorine resin, ABS resin, or the like. The spring 192 causes a damping force to be developed between the annular surface 190 and the friction element 198, whereby pivoting movement of the tensioner arm 130 in each direction of rotation is damped.

Rotational damping forces on the tensioner arm are produced cooperatively by the springs 140,192, with the latter damping through the associated friction plate 184 acting against the tensioner arm 130. This redundant damping also diminishes detrimental vibrations as might produce a resonant condition.

It can be seen that the arrangement of the spring 192 and friction plate 184 produces a compact, yet positive acting structure for damping pivoting of the tensioner arm 130.

## Claims

1. A serpentine belt system (10) comprising:
an endless belt (12) trained in a circuitous path about a plurality of rotatable pulleys (16, 18, 20, 24, 26) such as on an automobile engine (14) in an engine compartment, the pulleys operatively connected to various accessories operable by rotation of the pulleys, the pulleys being driven by a frictional force exerted by the driven endless belt on the pulleys;
a tensioner arm (44; 130) having an idler pulley (50; 132) thereon for engagement with a surface of the endless belt;
means (64; 154) for mounting the tensioner arm to a support (74; 145) for pivoting movement in first and second opposite directions relative to the support about an axis (48; 136); and
torsion coil spring means (92; 140) formed of a wire and acting between the mounting means (64; 154) and the tensioner arm for biasing the latter in one of the first and second directions;
characterised in that said wire has a rectangular or a square cross section, and in that said tensioner arm has an integrally formed first cylindrical wall (88; 146) radially outside of the torsion coil spring means which wall is arranged as an envelope closely around said coil spring means.

2. A system (10) according to claim 1 wherein the coil spring means (92, 140) has opposite ends (106, 108), wherein said tensioner arm (44, 130) has a mounting body (84), wherein there is a first wall (122) on the mounting body (84) having a first surface (120) facing in a first axial direction, wherein the mounting means (64, 154) has a second wall (68) with a second surface (118) facing the first surface (120), and wherein the opposite ends (106, 108) of the coil spring means (92, 140) engage the first and second walls (122, 68).

3. A system (10) according to claim 2 wherein the tensioner arm mounting body (84) has a third surface (124) facing axially oppositely to said first axial direction, wherein the mounting means (64, 154) has a friction producing surface (126) facing in said first axial direction, wherein said mounting means (64, 154) includes means for mounting the tensioner arm mounting body (84) between the second wall (68) and the friction producing surface (126) for axial movement relative to the second wall (168), and wherein said coil spring means (92, 140) is compressed between the first and second surfaces (120, 118) to thereby urge the third surface (124) against the friction producing surface (126) to damp pivoting movement of the tensioner arm (44, 130).

4. A system (10) according to claim 2 including means on the mounting body (84) for holding one of the coil spring means ends (108), and including means on the mounting means (64, 154) for holding the other of the coil spring means ends (106) so that the coil spring means (92, 140) can be loaded to produce a torsional force on the tensioner arm (44, 130).

5. A system (10) according to claim 2 wherein one of said first wall (122) and one coil spring means end (108) has a first axially extending pin (114) and the other of the first wall (122) and one coil spring means end (108) has a first socket (116) for reception of the first pin (114) to maintain the one coil spring means end (108) fixed relative to the first wall (122) to thereby facilitate torsion loading of the coil spring means (92, 140).

6. A system (128) according to claim 1 including a friction plate (184), means (134) for mounting the friction plate (184) to the mounting means (154) for axial movement relative thereto and for fixing the friction plate (184) against rotation relative to the mounting means (154), and means (192) independent of the torsion coil spring means (92, 140) for biasing the friction plate (184) axially towards a part of the tensioner arm (130) to damp pivoting of the tensioner arm (130).

7. A system (128) according to claim 6 wherein said friction plate (184) has a generally cylindrical configuration.

8. A system (128) according to claim 6, wherein said friction plate (184) has a stepped cylindrical configuration with a first portion (186) having a first diameter and a second portion (188) with a second diameter that is larger than the first diameter, wherein the (second) mounting means (134) mounts the first portion (186) to the (first) mounting means (154), and wherein the second portion (188) of the friction plate (184) has an annular axially facing surface (190) that is urged axially towards the part of the tensioner arm (130) by the biasing means (192).

9. A system (128) according to claim 6, 7 or 8 including a friction element (198) disposed between the friction plate (184) and the part of the tensioner arm (130).

10. A system (128) according to claim 8 or 9 wherein the biasing means (192) comprises a coil spring (192) which surrounds the first portion (186) of the friction plate (184) and bears against an axially facing surface (196) on the second portion (188) of the friction plate (184).

11. A system (128) according to claim 9 or 10 including means for securing the friction element (198) to one of the friction plate (184) and tensioner arm (130).

12. A system (128) according to claim 9, 10 or 11 wherein the friction element (198) is a resin material.

## Patentansprüche

1. Serpentinen-Riemensystem (10), umfassend einen Endlos-Riemen (12), der in einem verschlungenen Weg um eine Anzahl drehbarer Scheiben (16, 18, 20, 24, 26) geführt wird, wie im Motorraum eines Kraftfahrzeugesmotors (14), wobei die Riemenscheiben funktionell verbunden sind mit verschiedenem Zubehör, das durch die Drehung der Scheiben betrieben wird, und die Scheiben von einer Reibungskraft angetrieben werden, die vom angetriebenen Endlos-Riemen auf die Scheiben ausgeübt wird;
einen Spannarm (44, 130) mit einer Leerlaufscheibe (50, 132) darauf zum Eingriff mit einer Oberfläche des Endlos-Riemens;
Einrichtungen (64, 154) zur Montage des Spannarms an eine Halterung (74, 145) zur Schwenkbewegung in erste und zweite entgegengesetzte Richtungen bezüglich der Halterung um eine Achse (48, 136); und
Torsions-Spulenfedereinrichtungen (92, 140), die aus einem Draht gebildet sind und zwischen der Montageeinrichtung (64, 154) und dem Spannarm wirken, um den Spannarm in die erste oder die zweiten Richtung zu bewegen; dadurch gekennzeichnet, daß
der Draht rechteckigen oder quadratischen Querschnitt aufweist, und
radial außenseits der Torsions-Spulenfedereinrichtungen der Spannarm eine einstückig ausgebildete, erste zylindrische Wand (88, 146) hat, die dicht um die Spulenfedereinrichtungen als Umhüllung angeordnet ist.

2. System (10) nach Anspruch 1, wobei die Spulenfedereinrichtung (92, 40) entgegengesetzte Enden (106, 108) aufweist, worin: der Spannarm (44, 130) einen Montagekörper (84) hat; eine erste Wand (122) auf dem Montagekörper (84) eine erste Oberfläche (120) hat, die in eine erste axiale Richtung schaut; die Montageeinrichtung (64, 154) eine zweite Wand (68) hat, deren zweite Oberfläche (118) zur ersten Oberfläche (120) schaut; und die entgegengesetzten Enden (106, 108) der Spulenfedereinrichtung (92, 140) mit den ersten und zweiten Wänden (122, 68) eingreifen.

3. System (10) nach Anspruch 2, wobei der Montagekörper (84) des Spannarms eine dritte Oberfläche (124) hat, die axial entgegengesetzt zur ersten axialen Richtung schaut; die Montageeinrichtung (64, 154) eine reibungschaffende Oberfläche (126) hat, die in die erste axiale Richtung schaut; die Montageeinrichtung (64, 154) Einrichtungen zur Montage des Montagekörpers (84) des Spannarms zwischen der zweiten Wand (68) und der Reibung erzeugenden Oberfläche (126) enthält zur axialen Bewegung relativ zu der zweiten Wand (168); und die Spulenfedereinrichtung (92, 140) zwischen den ersten und zweiten Oberflächen (120, 118) zusammengedrückt ist, um dadurch die dritte Oberfläche (124) gegen die Reibung erzeugende Oberfläche (126) zu drücken, und die Schwenkbewegung des Spannarms (44, 130) zu dämpfen.

4. System (10) nach Anspruch 2, das Einrichtungen auf dem Montagekörper (84) enthält, um eine der Enden (108) der Spulenfedereinrichtung zu halten, und das Einrichtungen auf der Montageeinrichtung (64, 154) enthält, um das andere Ende (106) der Spulenfedereinrichtung zu halten, so daß die Spulenfedereinrichtung (92, 140) belastet werden kann, um eine Torsionskraft auf den Spannarm (44, 130) zu erzeugen.

5. System (10) nach Anspruch 2, wobei die erste Wand (122) oder das eine Ende (108) der Spulenfedereinrichtung einen ersten, axial verlaufenden Stift (114) aufweist, und das andere Teil der ersten Wand (122) oder des einen
Endes (108) der Spulenfedereinrichtung eine erste Büchse (116) aufweist zur Aufnahme des ersten Stifts (114), um das eine Ende (108) der Spulenfedereinrichtung fest relativ zu der ersten Wand (122) zu halten, um so die Torsionsbelastung der Spulenfedereinrichtung (92, 140) zu erleichtern.

6. System (128) nach Anspruch 1, umfassend eine Reibungsplatte (184), Einrichtungen (134) zur Montage der Reibungsplatte (184) an die Montageeinrichtung (154) für axiale Bewegung relativ dazu und zur Befestigung der Reibungsplatte (184) gegen Drehung relativ zu der Montageeinrichtung (154), und von der Spulenfedereinrichtung (92, 140) unabhängige Einrichtungen (192), um die Reibungsplatte (184) axial gegen einen Teil des Spannarms (130) in Anlage zu bringen, um das Schwenken des Spannarms (130) zu dämpfen.

7. System (128) nach Anspruch 6, wobei die Reibungsplatte (184) eine im allgemeinen zylindrische Konfiguration aufweist.

8. System (128) nach Anspruch 6, wobei die Reibungsplatte (184) eine abgestufte, zylindrische Konfiguration hat mit einem ersten Abschnitt (186) mit einem ersten Durchmesser und einem zweiten Abschnitt (188) mit einem zweiten Durchmesser, der größer ist als der erste Durchmesser, wobei die (zweite) Montageeinrichtung (134) den ersten Abschnitt (186) an die (erste) Montageeinrichtung (154) montiert, und wobei der zweite Abschnitt (188) der Reibungsplatte (184) eine ringförmige, axial gerichtete Oberfläche (190) aufweist, die von der Federeinrichtung (192) axial auf den Teil des Spannarms (130) zubewegt wird.

9. System (128) nach Anspruch 6, 7 oder 8, umfassend ein Reibungselement (198), das zwischen der Reibungsplatte (184) und dem Teil des Spannarms (130) angeordnet ist.

10. System (128) nach Anspruch 8 oder 9, wobei die Federeinrichtung (192) eine Spulenfeder (192) enthält, die den ersten Abschnitt (186) der Reibungsplatte (184) umfaßt und gegen eine axial gerichtete Oberfläche (196) auf dem zweiten Abschnitt (188) der Reibungsplatte (184) anliegt.

11. System (128) nach Anspruch 9 oder 10, umfassend Einrichtungen zur Sicherung des Reibungselements (198) an der Reibungsplatte (184) oder dem Spannarm (130).

12. System (128) nach Anspruch 9, 10 oder 11, wobei das Reibungselement (198) aus Harzmaterial ist.

## Revendications

1. Ensemble (10) à courroie sinueuse, comprenant :
une courroie sans fin (12) passant suivant un trajet sinueux autour de plusieurs poulies rotatives (16, 18, 20, 24, 26), par exemple sur un moteur d'automobile (14) placé dans un compartiment moteur, les poulies étant raccordées en service à divers accessoires fonctionnant sous l'action de la rotation des poulies, les poulies étant entraînées par une force de frottement exercée par la courroie menée sans fin sur les poulies,
un bras tendeur (44 ; 130) ayant une poulie folle (50 ; 132) destinée à coopérer avec une surface de la courroie sans fin,
un dispositif (64 ; 154) de montage du bras tendeur sur un support (74 ; 145) afin qu'il subisse un mouvement de pivotement dans un premier sens et un second sens opposés par rapport au support autour d'un axe (48; 136), et
un dispositif (92 ; 140) à ressort hélicoïdal de torsion formé d'un fil métallique et agissant entre le dispositif de montage (64 ; 154) et le bras tendeur afin qu'il rappelle ce dernier dans l'un des premier et second sens,
caractérisé en ce que le fil a une section rectangulaire ou carrée, et en ce que le bras tendeur a une première paroi cylindrique (88 ; 146) venue de matière radialement à l'extérieur du dispositif à ressort hélicoïdal de torsion dont la paroi est disposée comme enveloppe entourant intimement le dispositif à ressort hélicoïdal.

2. Ensemble (10) selon la revendication 1, dans lequel le dispositif (92, 140) à ressort hélicoïdal a des extrémités opposées (106, 108), dans lequel le bras tendeur (44, 130) a un corps (84) de montage, dans lequel une première paroi (122) du corps de montage (84) a une première surface (120) tournée dans une première direction axiale, le dispositif de montage (64, 154) a une seconde paroi (68) ayant une seconde surface (118) tournée vers la première surface (120), et dans lequel les extrémités opposées (106, 108) du dispositif (92, 140) à ressort hélicoïdal coopèrent avec la première et la seconde paroi (122, 68).

3. Ensemble (10) selon la revendication 2, dans lequel le corps (84) de montage du bras tendeur a une troisième surface (124) tournée axialement du côté opposé à la première direction axiale, dans lequel le dispositif de montage (64, 154) a une surface (126) génératrice de frottement tournée dans la première direction axiale, dans lequel le dispositif de montage (64, 154) comporte un dispositif de montage du corps (84) de montage de bras tendeur entre la seconde paroi (68) et la surface génératrice de frottement (126) afin qu'il présente un mouvement axial par rapport à la seconde paroi (168), et dans lequel le dispositif (92, 140) à ressort hélicoïdal est comprimé entre la première et la seconde surface (120, 118) afin que la troisième surface (124) soit repoussée contre la surface génératrice de frottement (126) pour amortir le mouvement de pivotement du bras tendeur (44, 130).

4. Ensemble (10) selon la revendication 2, comprenant un dispositif placé sur le corps de montage (84) et destiné à maintenir l'une des extrémités (108) du dispositif à ressort hélicoïdal, et comprenant un dispositif placé sur le dispositif de montage (64, 154) et destiné à maintenir l'autre des extrémités (106) du dispositif à ressort hélicoïdal afin que le dispositif (92, 140) à ressort hélicoïdal puisse être soumis à une charge créant une force de torsion sur le bras tendeur (44, 130).

5. Ensemble (10) selon la revendication 2, dans lequel l'une de la première paroi (122) ou de la première extrémité (108) du dispositif à ressort hélicoïdal a une première broche s'étendant axialement (114), et l'autre de la première extrémité (108) du dispositif à ressort hélicoïdal ou de la première paroi (122) a un premier logement (116) pour recevoir la première broche (114) afin que la première extrémité (108) du dispositif à ressort hélicoïdal soit maintenu fixée par rapport à la première paroi (122) et facilite ainsi l'application d'une force de torsion du dispositif (92, 140) à ressort hélicoïdal.

6. Ensemble (128) selon la revendication 1, comprenant une plaque de frottement (184), un dispositif (134) de montage de la plaque de frottement (184) sur le dispositif de montage (154) afin qu'elle puisse se déplacer axialement par rapport à lui et afin que la plaque de frottement (184) soit fixée en rotation par rapport au dispositif de montage (154), et un dispositif (192) indépendant du dispositif (92, 140) à ressort hélicoïdal de torsion et destiné à rappeler la plaque de frottement (184) en direction axiale vers une partie du bras tendeur (130) afin que le pivotement du bras tendeur (130) soit amorti.

7. Ensemble (128) selon la revendication 6, dans lequel la plaque de frottement (184) a une forme générale cylindrique.

8. Ensemble (128) selon la revendication 6, dans lequel la plaque de frottement (184) a une configuration cylindrique à gradin ayant une première partie (186) de premier diamètre et une seconde partie (188) de second diamètre supérieur au premier diamètre, dans lequel le (second) dispositif de montage (134) porte la première partie (186) du (premier) dispositif de montage (154), et dans lequel la seconde partie (188) de la plaque de frottement (184) a une surface annulaire (190) tournée axialement qui est repoussée axialement vers la partie du bras tendeur (130) par le dispositif de rappel (192).

9. Ensemble (128) selon la revendication 6, 7 ou 8, comprenant un élément de frottement (198) placé entre la plaque de frottement (184) et la partie du bras tendeur (130).

10. Ensemble (128) selon la revendication 8 ou 9, dans lequel le dispositif de rappel (192) comporte un ressort hélicoïdal (192) qui entoure la première partie (186) de la plaque de frottement (184) et est en appui contre une surface (196) tournée axialement de la seconde partie (188) de la plaque de frottement (184).

11. Ensemble (128) selon la revendication 9 ou 10, comprenant un dispositif de fixation de l'élément de frottement (198) à la plaque de frottement (184) ou au bras tendeur (130).

12. Ensemble (128) selon la revendication 9, 10 ou 11, dans lequel l'élément de frottement (198) est un matériau à base d'une résine.
